# EUROPÄISCHE PATENTSCHRIFT

(11) **EP 2 438 312 B1**
(45) Veröffentlichungstag und Bekanntmachung des Hinweises auf die Patenterteilung: **09.08.2017**
(21) Anmeldenummer: 10709005.2
(22) Anmeldetag: 17.03.2010
(51) Int. Cl.: F16B 5/00

(54) **ANORDNUNG ZUR VERBINDUNG VON SPEZIALGRAPHITTEILEN ZU MEHRTEILIGEN GRAPHITBAUELEMENTEN**
ARRANGEMENT FOR CONNECTING SPECIAL GRAPHITE PARTS TO FORM MULTI-PART GRAPHITE COMPONENTS
AGANCEMENT POUR LA CONNECTION DE PARTIES EN GRAPHITE SPÉCIAL POUR FORMER DES COMPOSANTS EN GRAPHITE EN PLUSIEURS PARTIES

(30) Priorität: 03.06.2009 DE 102009023708
(43) Veröffentlichungstag der Anmeldung: 11.04.2012
(73) Patentinhaber: KGT Graphit Technologie GmbH, 53578 Windhagen (DE)
(72) Erfinder: KORNMEYER, Torsten, 53639 Königswinter (DE)
(74) Vertreter: Lippert Stachow Patentanwälte Rechtsanwälte
(86) Internationale Anmeldenummer: PCT/EP2010/053444
(87) Internationale Veröffentlichungsnummer: WO 2010/139494

(56) Entgegenhaltungen:
- DE-A1- 3 907 913
- DE-U1-202005 011 631

## Beschreibung

Die Erfindung betrifft eine form- und kraftschlüssige Verbindung von Spezialgraphitteilen zu mehrteiligen Graphitbauelementen, wobei die Spezialgraphitteile zwei oder mehr Graphitplatten oder ähnliche Bauteile sind, die zu einem größeren Bauteil, wie einer flächigen Graphitplatte, miteinander verbindbar sind.

Es ist technisch schwierig bzw. unmöglich, besonders große Graphitbauteile aus einem Stück herzustellen. Aus diesem Grund werden kleinere Graphitbauteile mittels bekannter Verbindungsverfahren zu größeren Bauteilen zusammengesetzt. Das können größere Platten oder auch andere Konstruktionsteile, wie Gehäuseteile o.dgl. sein. Hauptsächlich kommen dabei Überlappungen oder Nut und Feder Verbindungen zum Einsatz. Zusätzlich können diese Verbindungen durch Verstiften, Verschrauben oder auch Verkleben fixiert werden.

Als Beispiel für die Verbindung von Graphitbauteilen wird auf die DE 39 07 913 A1 verwiesen. In dieser Druckschrift wird ein spezieller Klebstoff zum Verbinden von Graphitbauteilen zur Herstellung dauerhafter Klebeverbindungen beschrieben. Beispielsweise werden zwei durch Nut und Feder rechtwinklig zusammensteckbare Graphitplatten miteinander verklebt.

Auf diese Weise können auch mehrere Graphitplatten miteinander zu einer großflächigen Graphitplatte verbunden werden. Von Nachteil ist hier, dass die Übertragung von mechanischen Spannungen an der Verbindungsstelle nur ungenügend berücksichtigt werden kann.

Bei derartigen Verbindungstechniken können die materialspezifischen Eigenschaften der Graphitbauteile in den meisten Fällen nicht oder zumindest nur ungenügend berücksichtigt werden. Auf jeden Fall bedingen die Materialeigenschaften Einschränkungen in der Formgebung und Dimensionierung der Graphitbauteile. Thermisch und/oder mechanisch bedingte Spannungsverläufe im Material und an den Verbindungsstellen können nur bedingt berücksichtigt werden.

Das bedeutet, dass teils eine Überdimensionierung der miteinander zu verbindenden Graphitbauteile notwendig ist, um zu verhindern, dass Spannungen an der Verbindungsstelle einen Bruch des Materials verursachen.

Idealerweise sollte die Verbindungsstelle die gleichen physikalischen Eigenschaften aufweisen wie das umgebende solide Material.

Aus der DE 20 2005 011 631 U1 geht ein zusammengesetztes rahmenförmiges Graphitbauteil hervor, das aus vier Graphitleisten besteht, die an den Stoßecken kammartig ausgespart ineinander gesteckt sind und somit überlappende Verbindungen bilden. Die Verbindungen jeder Stoßecke werden jeweils durch einen Stift fixiert.

Alternativ können die Graphitleisten an den Stoßecken auch auf Stoß gelegt werden. Die Verbindung der Graphitleisten wird hier durch schwalbenschwanzförmige Verbindungselemente oder Federn fixiert.

Der Erfindung liegt die Aufgabe zugrunde, eine form- und kraftschlüssige Verbindung zwischen Graphitplatten oder ähnlichen Bauteilen, bei der die Nachteile des Standes der Technik nicht auftreten und bei der die Füge-/Verbindungsstelle nahezu die gleichen physikalischen Eigenschaften aufweist wie das die Verbindungsstelle umgebende solide Material.

Die der Erfindung zugrunde liegende Aufgabe wird dadurch gelöst, dass die Graphitplatten oder die ähnlichen Bauteile an den einander gegenüber liegenden Stirnseiten derart dreidimensional ineinander verzahnt sind, dass eine Stirnseite einer der Graphitplatten, oder der ähnlichen Bauteile, die Positivform der Verzahnung und die Stirnseite der gegenüber liegenden Graphitplatte, oder des ähnlichen Bauteils, die Negativform der Verzahnung aufweist, wobei die Verzahnung zwischen den Seitenflächen der Graphitplatten, oder der ähnlichen Bauteile, ausschließlich gleichmäßige Übergänge der Konturen ineinander aufweist.

In einer ersten Ausgestaltung der Erfindung erstreckt sich die Verzahnung kontinuierlich über die gesamte Ausdehnung der Stirnflächen. Damit wird über die gesamte Ausdehnung der Verbindungsstelle eine gleichmäßige Festigkeit und Krafteinleitung gewährleistet.

Die Verzahnung ist zumindest in X/Y-Richtung ausgeführt, jedoch bevorzugt in X/Y- und in X/Z- sowie Y/Z-Richtung.

In einer zweiten Fortführung weisen die Konturen in X/Y/Z-Richtung leichte Hinterschneidungen auf, wodurch eine annähernd vollkommene Form- und Kraftschlüssigkeit erreicht wird.

Zusätzlich können die Stirnseiten mit Stiften fixiert und darüber hinaus miteinander verklebt sein.

Es hat sich ganz überraschend gezeigt, dass mit der erfindungsgemäßen Ausgestaltung der Verbindungsstelle sämtliche Probleme des Standes der Technik umgangen werden können.

Durch die Erfindung wird gewährleistet, dass sämtliche an den Verbindungsstellen auftretenden Spannungen gleichmäßig in allen Vektoren in das umgebende Material abgeleitet werden, so dass die physikalischen Eigenschaften nur unbedeutend beeinflusst werden.

Weiterhin gewährleistet die Erfindung einen guten Kraft- und Formschluss, so dass zusätzliche Verbindungselemente, wie Schrauben, Stifte, nicht benötigt werden. Gleichwohl ist es möglich, eine unlösbare Verbindung durch zusätzliche Stifte oder Kleber zu realisieren.

Die Erfindung soll nachstehend an einem Ausführungsbeispiel näher erläutert werden. In den zugehörigen Zeichnungen zeigen:
- Fig. 1:: zwei erfindungsgemäß ausgestattete Graphitplatten, deren einander gegenüber liegenden mit einer Verzahnung ausgestatteten Stirnseiten; und
- Fig. 2:: die Graphitplatten nach Fig. 1 im zusammengefügten Zustand.

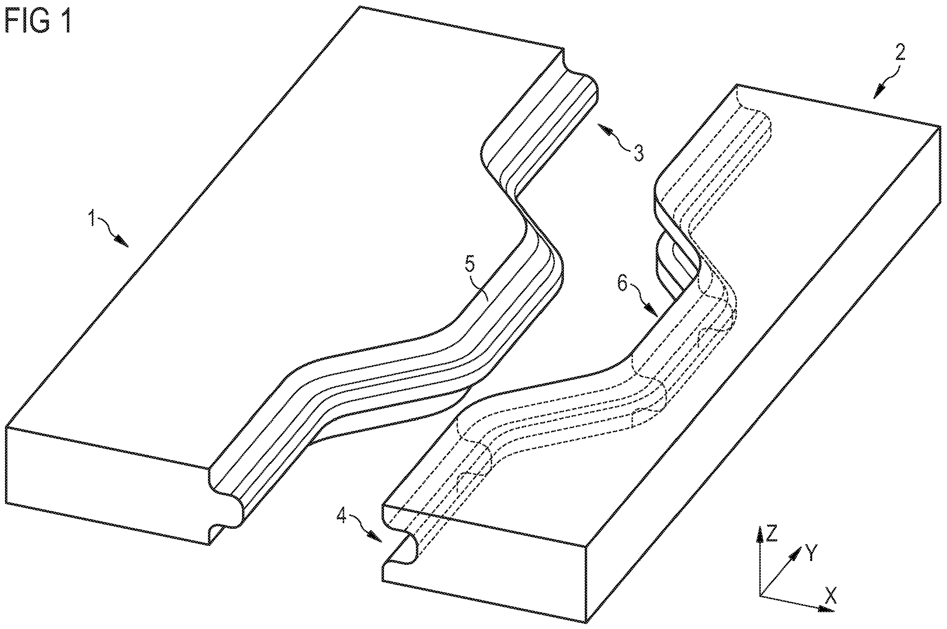

Gemäß Fig. 1 sind zwei Graphitplatten 1, 2 an den einander gegenüber liegenden Stirnseiten 3, 4 derart dreidimensional ineinander verzahnt, dass eine Stirnseite 3 einer Graphitplatte 1 die Positivform der Verzahnung 5 und die Stirnseite 4 der gegenüber liegenden Graphitplatte 2 die Negativform der Verzahnung 6 aufweist. Die Verzahnung 5, 6 weist zwischen den Seitenflächen der Graphitplatten 1, 2 ausschließlich gleichmäßige Übergänge der Konturen ineinander auf.

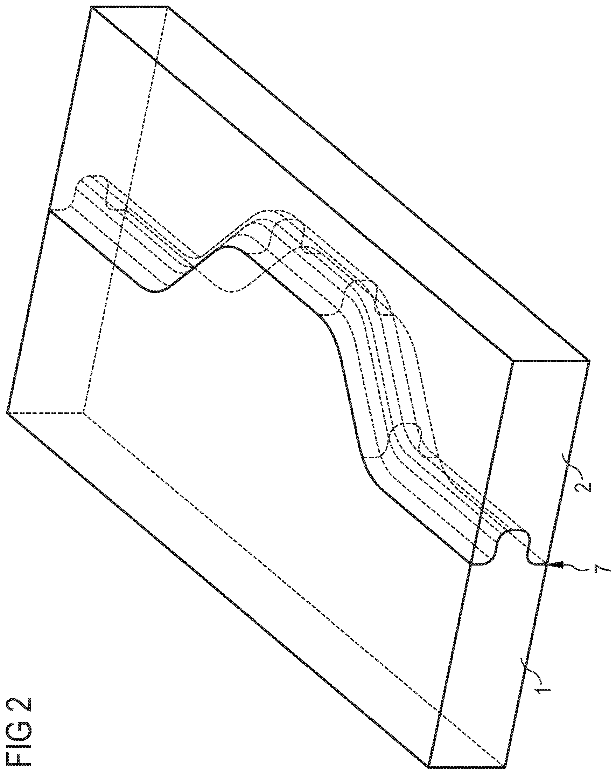

Die Verzahnung 5, 6 erstreckt sich kontinuierlich über die gesamte Ausdehnung der Stirnflächen 3, 4, so dass im zusammengesetzten Zustand (Fig. 2) über die gesamte Ausdehnung der Verbindungsfläche 7 der Stirnflächen 3, 4 eine gleichmäßige Festigkeit und Krafteinleitung gewährleistet wird.

Die Verzahnung ist in der bevorzugten Ausführungsform in X/Y- und in X/Z- sowie Y/Z-Richtung ausgeführt, wie aus Fig. 1 hervorgeht.

Die Verzahnung kann im Querschnitt gesehen Omega-ähnlich ausgebildet sein und in Längsrichtung die Form einer Sinuskurve einnehmen, die im Ausführungsbeispiel durch gerade Abschnitte in der Längserstreckung unterbrochen wird.

Um einen annähernd vollkommenen Form- und Kraftschluss beim Zusammensetzen der Graphitplatten 1, 2 zu erreichen, sind die Konturen in X/Y/Z-Richtung mit leichten Hinterschneidungen ausgeführt.

Zusätzlich können die Stirnseiten 3, 4 nach dem Zusammensetzen der Graphitplatten 1, 2 mit nicht dargestellten Stiften fixiert werden, die sich jeweils durch das Profil beider Verzahnungen 5, 6 erstrecken.

Selbstverständlich besteht auch die Möglichkeit, die Graphitplatten 1, 2 miteinander über die Verzahnung zu verbinden und zu verstiften und zusätzlich mit einem geeigneten Kleber dauerhaft miteinander zu verbinden.

Durch die Erfindung wird gewährleistet, dass sämtliche an den Verbindungsstellen der Verzahnung 5, 6 auftretenden Spannungen gleichmäßig in allen Vektoren in das umgebende Material der Graphitplatten 1, 2 abgeleitet werden, so dass die physikalischen Eigenschaften nur unbedeutend beeinflusst werden.

Weiterhin gewährleistet die Erfindung einen guten Kraft- und Formschluss, so dass zusätzliche Verbindungselemente, wie Schrauben, Stifte, an sich nicht benötigt werden. Gleichwohl ist es möglich, eine unlösbare Verbindung der Graphitplatten 1, 2 durch zusätzliche Stifte und eine Verklebung zu realisieren.

Es versteht sich, dass sich die Erfindung nicht zwangsläufig nur auf ebene Graphitplatten erstreckt, wie im Ausführungsbeispiel dargestellt, sondern sie kann auf entsprechende Weise bei gebogenen Platten oder auch zur Verbindung von Rohren oder anderweitig profilierten Gegenständen eingesetzt werden.

Weiterhin muss sich die Verzahnung (5, 6) nicht zwangsläufig über die gesamte Fläche der Stirnseiten 3, 4 erstrecken, sondern kann auch bei Bedarf unterbrochen sein, z.B. für Durchführungen o.dgl.

### Bezugszeichenliste

- 1: Graphitplatte
- 2: Graphitplatte
- 3: Stirnseite
- 4: Stirnseite
- 5: Verzahnung
- 6: Verzahnung
- 7: Verbindungsfläche

## Patentansprüche

1. Anordnung zur form- und kraftschlüssigen Verbindung der Stirnseiten von Graphitplatten oder ähnlichen Bauteilen zu mehrteiligen Graphitbauelementen zu einem größeren Bauteil, wie einer flächigen Graphitplatte, mittels einer Verzahnung der Stirnseiten, wobei die Graphitplatten (1, 2) oder die ähnlichen Bauteile an einander gegenüber liegenden Stirnseiten (3, 4) mit einer dreidimensionalen Verzahnung (5, 6) versehen sind, derart, dass eine Stirnseite (3) einer der Graphitplatten (1), oder der ähnlichen Bauteile, die Positivform der Verzahnung (5) und die Stirnseite (4) der gegenüber liegenden Graphitplatte (2), oder des ähnlichen Bauteils, die Negativform der Verzahnung (6) aufweist, wobei die Verzahnung (5, 6) zwischen den Seitenflächen der Graphitplatten (1, 2) oder der ähnlichen Bauteile ausschließlich gleichmäßige Übergänge der Konturen ineinander aufweist.

2. Anordnung nach Anspruch 1, **dadurch gekennzeichnet, dass** sich die Verzahnung (5, 6) kontinuierlich über die gesamte Ausdehnung der Stirnseiten (3, 4) erstreckt.

3. Anordnung nach Anspruch 1 oder 2, **dadurch gekennzeichnet, dass** die Verzahnung (5, 6) in X/Y-Richtung ausgeführt ist.

4. Anordnung nach einem der Ansprüche 1 bis 3, **dadurch gekennzeichnet, dass** die Verzahnung (5, 6) in X/Y- und in X/Z- sowie Y/Z-Richtung ausgeführt ist.

5. Anordnung nach einem der Ansprüche 1 bis 4, **dadurch gekennzeichnet, dass** die Konturen der Verzahnung (5, 6) in X/Y/Z-Richtung leichte Hinterschneidungen aufweisen.

6. Anordnung nach einem der Ansprüche 1 bis 5, **dadurch gekennzeichnet, dass** die Stirnseiten (3, 4) miteinander verklebt sind.

7. Anordnung nach einem der Ansprüche 1 bis 5, **dadurch gekennzeichnet, dass** die Stirnseiten (3, 4) mit Stiften fixiert sind.

8. Anordnung nach einem der Ansprüche 1 bis 7, **dadurch gekennzeichnet, dass** die Verzahnung (5, 6) im Querschnitt gesehen Omega-ähnlich ausgebildet ist und in Längsrichtung die Form einer durch gerade Abschnitte unterbrochenen Sinuskurve einnimmt.

## Claims

1. Arrangement for the form and force locking connection of the front sides of graphite plates or similar components to form multi-part graphite components to form one larger component, such as a flat graphite plate, by means of an interlocking of the front sides, wherein the graphite plates (1, 2) or the similar components are provided at opposing front sides (3, 4) with a three-dimensional interlocking (5, 6), in such a manner that one front side (3) of one of the graphite plates (1), or of the similar components, has the positive form of the interlocking (5) and the front side (4) of the opposite graphite plate (2), or of the similar components has the negative form of the interlocking (6), wherein the interlocking (5, 6) has exclusively even transitions of the contours into one another between the side surfaces of the graphite plates (1, 2) or of the similar components.

2. Arrangement according to Claim 1, **characterized in that** the interlocking (5, 6) extends continuously over the entire extent of the front sides (3, 4).

3. Arrangement according to Claim 1 or 2, **characterized in that** the interlocking (5, 6) is formed in the X/Y direction.

4. Arrangement according to one of Claims 1 to 3, **characterized in that** the interlocking (5, 6) is formed in the X/Y direction and in the X/Z direction and also in the Y/Z direction.

5. Arrangement according to one of Claims 1 to 4, **characterized in that** the contours of the interlocking (5, 6) have slight undercuts in the X/Y/Z direction.

6. Arrangement according to one of Claims 1 to 5, **characterized in that** the front sides (3, 4) are adhesively bonded to one another.

7. Arrangement according to one of Claims 1 to 5, **characterized in that** the front sides (3, 4) are fixed by way of pins.

8. Arrangement according to one of Claims 1 to 7, **characterized in that** the interlocking (5, 6) is formed with an omega-like cross section and, in the longitudinal direction, adopts the form of a sine curve which is interrupted by straight portions.

## Revendications

1. Agencement pour la connexion par engagement par correspondance de formes et/ou par force des côtés frontaux de plaques en graphite ou de composants similaires pour former des éléments structurels en graphite en plusieurs parties afin d'obtenir un plus gros composant, tel qu'une plaque en graphite plate, au moyen d'un engrènement des côtés frontaux, les plaques en graphite (1, 2) ou les composants similaires étant pourvus, au niveau de côtés frontaux opposés (3, 4), d'une denture tridimensionnelle (5, 6) de telle sorte qu'un côté frontal (3) de l'une des plaques en graphite (1) ou des composants similaires, présente la forme positive de la denture (5) et que le côté frontal (4) de la plaque en graphite opposée (2) ou du composant similaire présente la forme négative de la denture (6), la denture (5, 6) présentant entre les faces latérales des plaques en graphite (1, 2) ou des composants similaires, des transitions exclusivement uniformes des contours les uns dans les autres.

2. Agencement selon la revendication 1, **caractérisé en ce que** la denture (5, 6) s'étend en continu sur toute l'étendue des côtés frontaux (3, 4).

3. Agencement selon la revendication 1 ou 2, **caractérisé en ce que** la denture (5, 6) est réalisée dans la direction X/Y.

4. Agencement selon l'une quelconque des revendications 1 à 3, **caractérisé en ce que** la denture (5, 6) est réalisée dans la direction X/Y et dans la direction X/Z ainsi que dans la direction Y/Z.

5. Agencement selon l'une quelconque des revendications 1 à 4, **caractérisé en ce que** les contours de la denture (5, 6) présentent dans la direction X/Y/Z de légères contre-dépouilles.

6. Agencement selon l'une quelconque des revendications 1 à 5, **caractérisé en ce que** les côtés frontaux (3, 4) sont collés les uns aux autres.

7. Agencement selon l'une quelconque des revendications 1 à 5, **caractérisé en ce que** les côtés frontaux (3, 4) sont fixés avec des goupilles.

8. Agencement selon l'une quelconque des revendications 1 à 7, **caractérisé en ce que** la denture (5, 6), vue en section transversale, est réalisée avec une forme de type oméga et, en direction longitudinale, adopte la forme d'une courbe sinusoïdale interrompue par des sections droites.
